# EUROPEAN PATENT SPECIFICATION

(11) **EP 1 493 292 B1**
(45) Date of publication and mention of the grant of the patent: **13.09.2006**
(21) Application number: 03706827.7
(22) Date of filing: 05.03.2003
(51) Int. Cl.: H04Q 7/38

(54) **ALLOCATION OF CHANNELISATION CODE BASED ON COST FUNCTION**
ZUWEISUNG EINES KANALISIERUNGSKODES ABHÄNGIG VON EINER KOSTENFUNKTION
ATTRIBUTION DE CODE DE DECOUPAGE EN CANAUX REPOSANT SUR UNE FONCTION DE COUT

(30) Priority: 29.03.2002 EP 02076250
(43) Date of publication of application: 05.01.2005
(73) Proprietor: Koninklijke Philips Electronics N.V., 5621 BA Eindhoven (NL)
(72) Inventor: CHENG, Jiang, J., NL-5656 AA Eindhoven (NL)
(74) Representative: Eleveld, Koop Jan
(86) International application number: PCT/IB2003/000963
(87) International publication number: WO 2003/084271

(56) References cited:
- EP-A- 1 035 676
- US-A- 5 796 722
- US-A- 5 886 988
- US-A1- 2001 041 572

## Description

The invention relates to a telecommunication system comprising a base station and mobile terminals, which base station comprises a generator for generating channelization codes defining channels used for communication between said base station and mobile terminals, and which base station comprises a calculator for calculating a cost function for a channelization code.

The invention also relates to a base station for use in a telecommunication system comprising a base station and mobile terminals, which base station comprises a generator for generating channelization codes defining channels used for communication between said base station and mobile terminals, and which base station comprises a calculator for calculating a cost function for a channelization code, and to a mobile terminal for use in a telecommunication system comprising a base station and mobile terminals, which base station comprises a generator for generating channelization codes defining channels used for communication between said base station and mobile terminals, and which base station comprises a calculator for calculating a cost function for a channelization code, and to a method for use in a telecommunication system comprising a base station and mobile terminals, which base station comprises a generator for generating channelization codes defining channels used for communication between said base station and mobile terminals, and which base station comprises a calculator for calculating a cost function for a channelization code, and to a processor program product for use in a telecommunication system comprising a base station and mobile terminals, which base station comprises a generator for generating channelization codes defining channels used for communication between said base station and mobile terminals, and which base station comprises a calculator for calculating a cost function for a channelization code.

Such a telecommunication system is for example a Code Division Multiple Access system or CDMA system like an International Mobile Telecommunication system 2000 or IMT-2000, which uses Orthogonal Variable Spreading Factor codes or OVSF codes as its channelization codes.

A prior art telecommunication system is known from the article "Study on Dynamic Codes Assignment in Wideband Code Division Multiple Access Communications Systems" written by CHENG Jiang, ZHU Shi-hua and DANG An-hong, School of Electronics and Information Engineering, Xi'an Jiaotong University, Xi'an 710049, China.

This article describes OVSF codes, defines a complicated cost function and gives further mathematical background with respect to code assignment and channel assignment.

Generally, OVSF codes are generated using a code tree via construction steps similar to the steps used in Hadamard coding: at a first layer, there is a one first code, at a second layer, there are two branches each with a second code and emanating from said first one code, with the top branch comprising a second code consisting of said first one code repeated by itself, and with the bottom branch comprising a second code consisting of said first one code repeated by its negation, etc. So the third layer comprises four third codes, the fourth layer comprises eight fourth codes and so on. Due to not all these codes being orthogonal, when a specific code in a specific branch is used, all codes in all branches emanating from this specific branch can no longer be used, until said specific code has become free again, for example due to an ongoing call being finished. The length of a code (with a first code having a length of one symbol, with a second code having a length of two symbols, with a third code having a length of four symbols, with a fourth code having a length of eight symbols etc.) interacts with the data rate of a channel: for example at a code length of 4 symbols, the data rate can be for example 2 Mbit/s, while at a code length of 512 symbols, the data rate then can be for example 16kbit/s.

When a set up message arrives at said base station requesting a new call to be set up for a predefined data rate, this predefined data rate defines the maximum code length for the new code required for this new call, and the complicated cost function described in said article then calculates the best new code to be selected in view of traffic needs, lowest interference and compact assignment, thereby taking into account the old codes already used for other calls.

European patent application 1 035 676 relates to CDMA communication systems and describes a method of communicating a selected channelization code for a downlink to a user. The method comprises transmitting a set of nodes of a code tree comprising a defined path of the tree for the user and transmitting an identifier identifying one of the set of nodes to be used. The set of nodes is transmitted during a RAB (radio access bearer) establishment session. If the required spreading factor for a particular user changes, only the identifier is to be modified. When the new node for the user would clash with a node reserved by another user, the code tree should be redefined. With the method of D1, instead of repeating the complete RAB establishment, only the node for the clashing user is to be redefined.

The known telecommunication system is disadvantageous, inter alia, due to treating ongoing calls statically.

It is an object of the invention, inter alia, of providing a telecommunication system as defined in the preamble which treats ongoing calls more dynamically.

In order to achieve this object a telecommunication system is provided according to claim 1.

By introducing said transferor, a kind of a handover/handoff function has been created for transferring an ongoing call to another channel dependently upon one or more calculated cost functions. This dependency for example originates from comparing cost functions with each other and/or with thresholds and/or originates from combining cost functions etc. As a result, the telecommunication system according to the invention treats ongoing calls dynamically, by allocating channels dynamically to ongoing calls. Compared to prior art telecommunication systems treating ongoing calls statically, by allocating channels statically to ongoing calls (one call keeping the same channel all the time until said call is finished), the telecommunication system according to the invention operates more efficiently (each call using that channel that corresponds with an optimum use of the codes and with channel changes during ongoing calls belonging to the possibilities).

The invention is based upon an insight, inter alia, that the efficiency of telecommunication systems does not just depend upon the assigning of codes/channels to new calls, but that this efficiency also depends upon the reassigning of codes/channels to ongoing calls, and is based upon a basic idea, inter alia, that cost functions can be used, in addition to efficiently assigning codes/channels to new calls, for efficiently reassigning codes/channels to ongoing calls.

The invention solves the problem, inter alia, of providing a telecommunication system as defined in the preamble which can treat ongoing calls more dynamically, and is advantageous, inter alia, in that the efficiency of said telecommunication system has been improved.

A first embodiment of the telecommunication system according to the invention as defined in claim 2 is advantageous in that said base station comprises a sender for sending a transferring message to said mobile terminal and comprising an old channelization code and a new channelization code.

By introducing said sender, with said old channelization code defining an old channel and said new channelization code defining a new channel, said transferring message is sent, for example via a data link or via a control link, to said mobile terminal.

A second embodiment of the telecommunication system according to the invention as defmed in claim 3 is advantageous in that said mobile terminal comprises a receiver for receiving said transferring message.

By introducing said receiver, said transferring message is received, for example via a data link or via a control link, by said mobile terminal.

A third embodiment of the telecommunication system according to the invention as defined in claim 4 is advantageous in that said cost function is a function of a sum of products of an occupation parameter and a data rate for at least a specific level and divided by a data rate for a neighboring level.

This cost function is less complicated than known cost functions and strongly reduces the processing capacity.

A fourth embodiment of the telecommunication system according to the invention as defmed in claim 5 is advantageous in that said cost function for a code c in layer i = COST = 1 - [Σ u(x)r(x) / rᵢ₋₁], with r(x) being the data rate of a layer to which code x belongs, with u(x) being equal to 0 if x is free and being equal to 1 if x is occupied, and with rᵢ₋₁ being the data rate of layer i-1.

This cost function is of lowest complexity and easy to implement, thereby requiring reduced processing capacity.

It should be noted that said third and fourth embodiment are not necessarily limited to be used in combination with said transferor, the cost function according to the invention may be used solely in the static situation where ongoing calls are just treated statically and where said cost function is just used for selecting new codes for new calls to be set up.

Embodiments of the base station according to the invention, of the mobile terminal according to the invention, of the method according to the invention and of the processor program product according to the invention correspond with the embodiments of the telecommunication system according to the invention.

These and other aspects of the invention will be apparent from and elucidated with reference to the embodiments(s) described hereinafter.
Fig. 1 illustrates in block diagram form a telecommunication system according to the invention comprising a base station according to the invention and a terminal according to the invention, and
Fig. 2 illustrates a flow chart for elucidating a method according to the invention and a processor program product according to the invention.

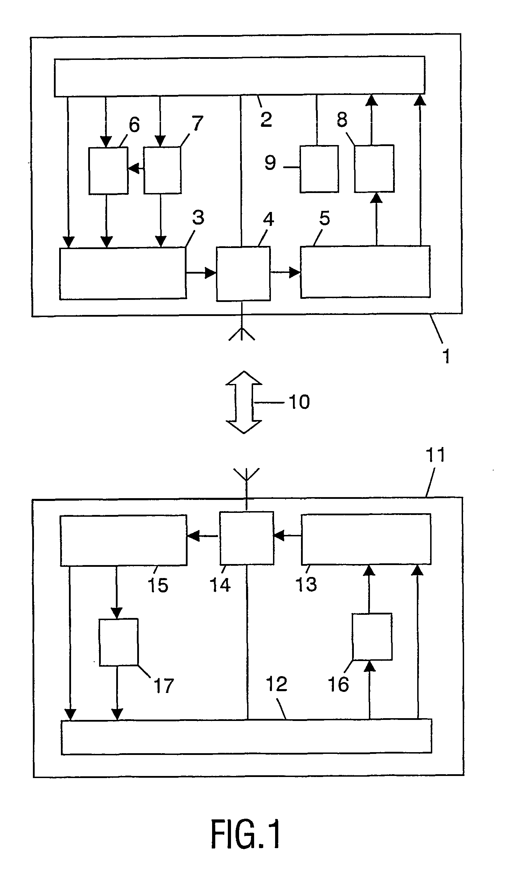

Fig. 1 illustrates a base station 1 comprising a controller 2 coupled to a sender 3 directly and via a generator 6 and via a transferor 7, which transferor 7 is further coupled to said generator 6. Sender 3 is coupled to an interface 4 which is further coupled to said controller 2, to an antenna and to a receiver 5. Receiver 5 is coupled to controller 2 directly and via a detector 8. Base station 1 further comprises a calculator 9. Mobile terminal 11 comprises a controller 12 coupled directly to a sender 13 and indirectly via a generator 6. Sender 13 is coupled to an interface 14, which is further coupled to said controller 12, to an antenna and to a receiver 15. Receiver 15 is coupled directly to controller 12 and via detector 17. Both antennas are designed for radio communication via a channel 10.

Prior art telecommunication systems comprise a base station 1 and a mobile terminal 11, which base station 1 comprises a generator 6 for generating channelization codes defining channels used for communication between said base station 1 and said mobile terminal 11, and which base station 1 comprises a calculator 9 for calculating a cost function for a channelization code. Said channelization codes are for example Orthogonal Variable Spreading Factor codes or OVSF codes, which OVSF codes together with a complicated cost function and further mathematical background with respect to code assignment and channel assignment have been described in said article "Study on Dynamic Codes Assignment in Wideband Code Division Multiple Access Communications Systems".

Generally, OVSF codes are generated using a code tree via construction steps similar to the steps used in Hadamard coding: at a first layer, there is a one first code, at a second layer, there are two branches each with a second code and emanating from said first one code, with the top branch comprising a second code consisting of said first one code repeated by itself, and with the bottom branch comprising a second code consisting of said first one code repeated by its negation, etc. So the third layer comprises four third codes, the fourth layer comprises eight fourth codes and so on. Due to not all these codes being orthogonal, when a specific code in a specific branch is used, all codes in all branches emanating from this specific branch can no longer be used, until said specific code has become free again, for example due to an ongoing call being finished. The length of a code (with a first code having a length of one symbol, with a second code having a length of two symbols, with a third code having a length of four symbols, with a fourth code having a length of eight symbols etc.) interacts with the data rate of a channel: for example at a code length of 4 symbols, the data rate can be for example 2 Mbit/s, while at a code length of 512 symbols, the data rate then can be for example 16 kbit/s.

In a more practical example, at a first layer, there is one first code C₁(1)=1. At a second layer, there are two second codes C₂(1)=(1,1) and C₂(2)=(1,-1). At a third layer, there are four third codes C₃(1)=(1,1,1,1), C₃(2)=(1,1,-1,-1), C₃(3)=(1,-1,1,-1) and C₃(4)= (1,-1,-1,1) etc. In case of six or more layers being present, with codes C₄(1), C₈(5) and C₁₆(12) being already used, in response to a request for a new call to be set up at a data rate corresponding with the fifth layer, the only codes still available at this fifth layer are C₁₆(5) - C₁₆(8), C₁₆(11) and C₁₆(13) - C₁₆(16).

When a set up message originating from mobile terminal 11 arrives at said base station 1 requesting a new call to be set up for a predefined data rate, this predefined data rate defines the maximum code length for the new code required for this new call, and the complicated cost function described in said article then calculates the best new code to be selected in view of traffic needs, lowest interference and compact assignment, thereby taking into account the old codes already used for other calls. In said practical example, said complicated cost function will usually come to the result that for said new call to be set up, code C₁₆(11) is to be selected and used, due to all other codes still free at this fifth layer causing more codes at said fourth layer to be blocked (with C₈(6) already being blocked due to C₁₆(12) being already used).

Base station 1 according to the invention comprises transferor 7 for transferring an ongoing call between said base station 1 and a mobile terminal 11 from a first channel defined by a first channelization code to a second channel defined by a second channelization code in dependence of at least one calculated cost function. A kind of a handover/handoff function has been created for transferring an ongoing call to another channel dependently upon one or more calculated cost functions.

For example in case of five calls going on and using the channels defined by the codes C₄(1), C₈(5), C₁₆(5), C₁₆(11) and C₁₆(12), when one of said five calls using the channel defined by code C₁₆(12) is finished, controller 2 will instruct calculator 9 to calculate cost functions for the codes used in the other four still ongoing calls and/or for certain codes still available. The calculation results are compared with each other and/or with thresholds and/or are combined, and as a consequence, controller 2 will find out that it is more efficient to transfer the ongoing call using the channel defined by code C₁₆(5) from this channel to the channel defined by the code C₁₆(12), due to code C₁₆(5) blocking for example C₈(3), which then would become free, with code C₁₆(12) blocking code C₈(5) which however is also already being blocked by code C₁₆(11). Controller 2 then instructs transferor 7 to transfer the ongoing call using the channel defined by code C₁₆(5) to the channel defined by the code C₁₆(12). Transferor 7 either communicates directly with sender 3 or communicates indirectly with sender 3 via generator 6, and as a result a transferring message is sent from sender 6 via interface 4 and channel 10 (being a data link or a control link and defined by code C₁₆(5)) to mobile terminal 11. This transferring message for example comprises said old code C₁₆(5) and said new code C₁₆(12).

In mobile terminal 11, said transferring message arrives via interface 14 and receiver 15 and is detected by detector 17, which informs controller 12 that a channel change needs to be done. In response, controller 12 instructs generator 16 to generate code C₁₆(12) instead of code C₁₆(5), and said ongoing call is now continued via the channel defined by this code C₁₆(12). As a result, the telecommunication system according to the invention has an improved efficiency due to using channels more efficiently.

More generally, for example in case an ongoing call using a certain channel defined by a certain code is finished, the costs of every code in the same layer of this certain code could be calculated with a cost function. If this certain code has the highest costs, this certain code will be set free, and the process is finished. If any other code defining a channel still used by a further (ongoing) call has higher costs, a handover/handoff may occur, with said further (ongoing) call being transferred from the channel defined by said other code to the channel defined said certain code, but usually just in case said certain code also satisfies a constrain threshold based on a quality of service or QoS requested by said further (ongoing) call. Then said other code will be set free.

Alternatively and/or in addition, controller 2 may also instruct calculator 9 to calculate cost functions for the codes used in the ongoing calls and/or for certain codes still available in response to a request for a new call to be set up and/or in response to an elapse of a time interval and/or in response to an ongoing call requesting another data rate.

Said transferring message may be a packet signal sent via the control link or the data link, and/or may be a (part of a) time slot forming part of said control link or said data link, with said old channelization code forming part of a header of said packet or being located at a predefined first location in said time slot and/or being used for scrambling purposes possibly together with a scrambling code, and with said new channelization code forming part of a data part of said packet or being located at a predefined second location in said time slot.

The cost function according to the invention is generally preferably a function of a sum of products of an occupation parameter and a data rate for at least a specific level and divided by a data rate for a neighboring level, and more particularly defined by the formula COST = 1 - [Σ u(x)r(x) / rᵢ₋₁], for a code c in layer i, with r(x) being the data rate of a layer to which code x belongs, with u(x) being equal to 0 if x is free and being equal to 1 if x is occupied, and with rᵢ₋₁ being the data rate of layer i-1. Said Σ u(x)r(x) is the sum over the set x ∈ B(c) with B(c) being the subset including all codes of a branch M(c) with M(c) being the mother code of code c. This cost function according to the invention may be used solely in the static situation where ongoing calls are just used statically and where said cost function is just used for selecting new codes for new calls to be set up.

Each block shown or not shown, can be 100% hardware, 100% software or a mixture of both. Each block shown or not shown can be integrated with each other block shown and/or not shown. Especially generator 6 (16) and/or transferor 7 and/or detector 8 (17) can be integrated with each other and or with controller 2 (12) due to being realizable via a processor/memory. Sender 3 (13), interface 4 (14) and receiver 5 (15) may comprise their own processors/memories or use and/or be controlled by controller 2 (12), and may further comprise switches, buffers, duplexers, etc.

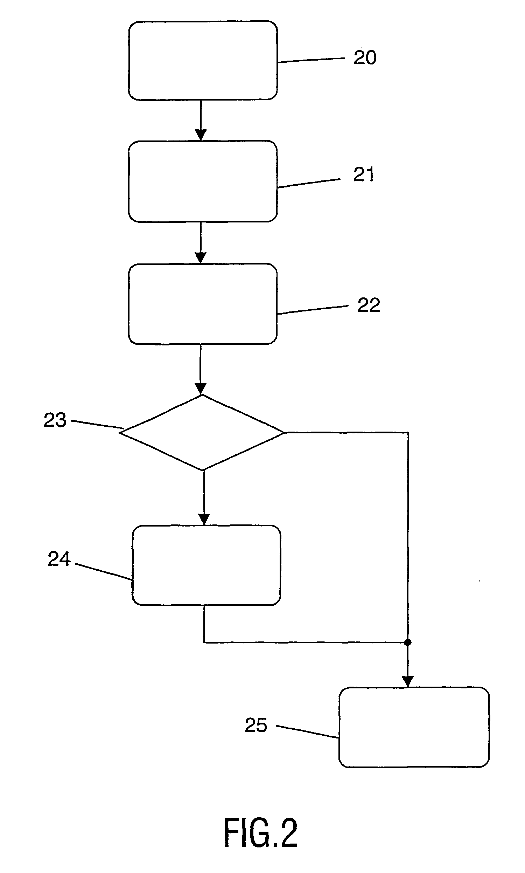

In the flow chart shown in fig. 2 for elucidating a method according to the invention and a processor program product according to the invention, the following blocks have the following meaning:
Block 20: Start in response to a detection of an ongoing call being finished and/or a new call needing to be set up and/or in response to an elapse of a time interval and/or in response to an ongoing call requesting another data rate; goto 21;
Block 21: Calculate cost functions; goto 22;
Block 22: Compare said calculated cost functions with each other and/or with thresholds and/or combine said calculated cost functions; goto 23;
Block 23: Is there an improvement possible ? If yes, goto 24, if no, goto 25;
Block 24: Transfer an ongoing call from a first channel defined by a first channelization code to a second channel defmed by a second channelization code in dependence of at least one calculated cost function.; goto 25;
Block 25: Stop.

The method according to the invention comprises steps like the transferring of an ongoing call between said base station and a mobile terminal from a first channel defined by a first channelization code to a second channel defined by a second channelization code. The processor program product according to the invention comprises functions like the transferring of an ongoing call between said base station and a mobile terminal from a first channel defined by a first channelization code to a second channel defined by a second channelization code. Said steps and functions are for example as follows:

A first step/function comprises (Block 20) the start in response to a detection of an ongoing call being finished and/or a new call needing to be set up and/or in response to an elapse of a time interval and/or in response to an ongoing call requesting another data rate, with each detection being a possible substep/subfunction (goto 21). Then, a second step/function involves the calculation (Block 21) of cost functions, with each calculation being a possible substep/subfunction (goto 22). A third step/function comprises the comparison (Block 22) of said calculated cost functions with each other and/or with thresholds and/or the combination of said calculated cost functions, with each comparison/combination being a possible substep/subfunction (goto 23). A fourth step/function involves (Block 23) the checking whether an improvement is possible ? (If yes, goto 24, if no, goto 25). This checking for example comprises the establishment of a cost function of a code used in an ongoing call being larger/smaller than the cost function of a code still available. If yes (Block 24), a next step/function involves the transfer of an ongoing call from a first channel defined by a first channelization code to a second channel defined by a second channelization code in dependence of at least one calculated cost function (goto 25). Then these steps/functions are finished by a last step/function (Block 25).

Of course, further steps/functions are not to be excluded, like for example the transmitting and the receiving of transferring messages, the adaption of criteria used for said comparing and/or combining and/or checking dependently upon for example the amount of traffic and/or the time of the day, the transfer of an ongoing call from a first channel defined by a first channelization code to a second channel defmed by a second channelization code as a result of said ongoing call getting a lower data rate due to for example emergency situations etc.

## Claims

1. Telecommunication system comprising a base station (1) and mobile terminals (11), which base station (1) comprises a generator (6) for generating channelization codes defining channels used for communication between said base station (1) and mobile terminals (11), and which base station (1) comprises a transferor (7) for transferring an ongoing call between said base station (1) and a mobile terminal (11) from a first channel defined by a first channelization code to a second channel defined by a second channelization code, **characterized in that** said base station (1) comprises a calculator (9) for calculating a cost function based on an amount of channelization codes being blocked due to the transfer, for enabling compact assignment of channelization codes to the mobile terminals (11), and **in that** the transferor (7) transfers the ongoing call in dependence of at least one calculated cost function.

2. Telecommunication system according to claim1, **characterized in that** said base station (1) comprises a sender (3) for sending a transferring message to said mobile terminal (11) and comprising an old channelization code and a new channelization code.

3. Telecommunication system according to claim 2, **characterized in that** said mobile terminal (11) comprises a receiver (15) for receiving said transferring message.

4. Telecommunication system according to claim 1, **characterized in that** said cost function is a function for a channelization code c in layer i of a sum of products of an occupation parameter for other channelization codes and a data rate for said other channelization codes and divided by a data rate for channelization codes in layer i-1.

5. Telecommunication system according to claim 4, **characterized in that** said cost function = COST = 1-[Σ u(x)r(x) / rᵢ₋₁], with r(x) being the data rate of the layer i to which code x belongs, with u(x) being the occupation parameter being equal to 0 if x is free and being equal to 1 if x is occupied, and with rᵢ₋₁ being the data rate of layer i-1, wherein Σu(x)r(x) is the sum over all codes emanating from the mother code of code c.

6. Base station (1) for use in a telecommunication system comprising a base station (1) and mobile terminals (11), which base station (1) comprises a generator (6) for generating channelization codes defining channels used for communication between said base station (1) and mobile terminals (11), and which base station (1) comprises a transferor (7) for transferring an ongoing call between said base station (1) and a mobile terminal (11) from a first channel defined by a first channelization code to a second channel defined by a second channelization code, **characterized in that** said base station (1) comprises a calculator (9) for calculating a cost function based on an amount of channelization codes being blocked due to the transfer, for enabling compact assignment of channelization codes to the mobile terminals (11), and **in that** the transferor (7) transfers the ongoing call in dependence of at least one calculated cost function.

7. Method for use in a telecommunication system comprising a base station (1) and mobile terminals (11), which base station (1) comprises a generator (6) for generating channelization codes defining channels used for communication between said base station (1) and mobile terminals (11), and which base station (1) comprises a transferor (7) for transferring an ongoing call between said base station (1) and a mobile terminal (11) from a first channel defined by a first channelization code to a second channel defined by a second channelization code, **characterized in that** said method comprises the step of calculating (21) a cost function based on an amount of channelization codes being blocked due to the transfer, for enabling compact assignment of channelization codes to the mobile terminals (11), and **in that** the step of transferring is performed in dependence of at least one calculated cost function.

8. Processor program product for use in a telecommunication system comprising a base station (1) and mobile terminals (11), which base station (1) comprises a generator (6) for generating channelization codes defining channels used for communication between said base station (1) and mobile terminals (11), and which base station (1) comprises a transferor (7) for transferring an ongoing call between said base station (1) and a mobile terminal (11) from a first channel defined by a first channelization code to a second channel defined by a second channelization code, **characterized in that** processor program product comprises the function calculating (21) a cost function based on an amount of channelization codes being blocked due to the transfer, for enabling compact assignment of channelization codes to the mobile terminals (11) and **in that** the transferring is performed in dependence of at least one calculated cost function.

## Patentansprüche

1. Telekommunikationssystem mit einer Basisstation (1) und mit mobilen Endgeräten (11), wobei die genannte Basisstation (1) einen Generator (6) aufweist zum Erzeugen von Kanalisierungscodes, die Kanäle definieren, die zur Kommunikation zwischen der genannten Basisstation (1) und mobilen Endgeräten (11) verwendet werden, und wobei die genannte Basisstation (1) einen Überträger (7) zum Übertragen eines laufenden Anrufs zwischen der genannten Basisstation (1) und einem mobilen Endgerät (11) von einem ersten durch einen ersten Kanalisierungscode definierten Kanal zu einem zweiten durch einen zweiten Kanalisierungscode definierten Kanal aufweist, **dadurch gekennzeichnet, dass** die genannte Basisstation (1) einen Rechner (9) aufweist zum Berechnen einer Kostenfunktion auf Basis eines Betrags an Kanalisierungscodes, die durch die Übertragung gesperrt worden sind, zum Ermöglichen einer gedrängten Zuordnung von Kanalisierungscodes zu den mobilen Endgeräten (11), und dass der Überträger (7) den laufenden Anruf in Abhängigkeit von wenigstens einer berechneten Kostenfunktion überträgt.

2. Telekommunikationssystem nach Anspruch 1, **dadurch gekennzeichnet, dass** die genannte Basisstation (1) einen Sender (3) aufweist zum Senden einer Übertragungsnachricht zu dem genannten mobilen Endgerät (11) und einen alten Kanalisierungscode sowie einen neuen Kanalisierungscode aufweist.

3. Telekommunikationssystem nach Anspruch 2, **dadurch gekennzeichnet, dass** das genannte mobile Endgerät (11) einen Empfänger (15) aufweist zum Empfangen der genannten Übertragungsnachricht.

4. Telekommunikationssystem nach Anspruch 1, **dadurch gekennzeichnet, dass** die genannte Kostenfunktion eine Funktion für einen Kanalisierungscode c in der Schicht i einer Summe von Produkten eines Belegungsparameters für andere Kanalisierungscodes und einer Datenrate für die genannten anderen Kanalisierungscodes und geteilt durch eine Datenrate für Kanalisierungscodes in der Schicht i-1 ist.

5. Telekommunikationssystem nach Anspruch 4, **dadurch gekennzeichnet, dass** die genannte Kostenfunktion = COST = 1-[Σu(x)r(x) / rᵢ₋₁] ist, wobei r(x) die Datenrate der Schicht i ist, zu der der Code x gehört, wobei u(x) der Belegungsparameter ist, der gleich 0 ist, wenn x frei ist, und gleich 1 ist, wenn x belegt ist, und wobei rᵢ₋₁ die Datenrate der Schicht i-1 ist, wobei Σu(x)r(x) die Summe über alle Codes ist, entsprungen aus dem Muttercode des Codes c.

6. Basisstation zur Verwendung in einem Telekommunikationssystem mit einer Basisstation (1) und mit mobilen Endgeräten (11), wobei diese Basisstation (1) einen Generator (6) aufweist zum Erzeugen von Kanalisierungscodes, die Kanäle definieren, die zur Kommunikation zwischen der genannten Basisstation (1) und mobilen Endgeräten (11) verwendet werden, und wobei die genannte Basisstation (1) einen Überträger (7) zum Übertragen eines laufenden Anrufs zwischen der genannten Basisstation (1) und einem mobilen Endgerät (11) von einem ersten durch einen ersten Kanalisierungscode definierten Kanal zu einem zweiten durch einen zweiten Kanalisierungscode definierten Kanal aufweist, **dadurch gekennzeichnet, dass** die genannte Basisstation (1) einen Rechner (9) aufweist zum Berechnen einer Kostenfunktion auf Basis eines Betrags an Kanalisierungscodes, die durch die Übertragung gesperrt worden sind, zum Ermöglichen einer gedrängten Zuordnung von Kanalisierungscodes zu den mobilen Endgeräten (11), und dass der Überträger (7) den laufenden Anruf in Abhängigkeit von wenigstens einer berechneten Kostenfunktion überträgt.

7. Verfahren zur Anwendung in einem Telekommunikationssystem mit einer Basisstation (1) und mit mobilen Endgeräten (11), wobei diese Basisstation (1) einen Generator (6) aufweist zum Erzeugen von Kanalisierungscodes, die Kanäle definieren, die zur Kommunikation zwischen der genannten Basisstation (1) und mobilen Endgeräten (11) verwendet werden, und wobei die genannte Basisstation (1) einen Überträger (7) zum Übertragen eines laufenden Anrufs zwischen der genannten Basisstation (1) und einem mobilen Endgerät (11) von einem ersten durch einen ersten Kanalisierungscode definierten Kanal zu einem zweiten durch einen zweiten Kanalisierungscode definierten Kanal aufweist, **dadurch gekennzeichnet, dass** das genannte Verfahren den Verfahrensschritt zum Berechnen (21) einer Kostenfunktion auf Basis eines Betrags an Kanalisierungscodes, die durch die Übertragung gesperrt worden sind, zum Ermöglichen einer gedrängten Zuordnung von Kanalisierungscodes zu den mobilen Endgeräten (11), und dass der Verfahrensschritt der Übertragung in Abhängigkeit von wenigstens einer berechneten Kostenfunktion durchgeführt wird.

8. Prozessorprogrammprodukt zur Anwendung in einem Telekommunikationssystem mit einer Basisstation (1) und mobilen Endgeräten (11), wobei diese Basisstation (1) einen Generator (6) aufweist zum Erzeugen von Kanalisierungscodes, die Kanäle definieren, die zur Kommunikation zwischen der genannten Basisstation (1) und mobilen Endgeräten (11) verwendet werden, und wobei die genannte Basisstation (1) einen Überträger (7) zum Übertragen eines laufenden Anrufs zwischen der genannten Basisstation (1) und einem mobilen Endgerät (11) von einem ersten durch einen ersten Kanalisierungscode definierten Kanal zu einem zweiten durch einen zweiten Kanalisierungscode definierten Kanal aufweist, **dadurch gekennzeichnet, dass** das Prozessorprogrammprodukt die Funktion der Berechnung einer Kostenfunktion auf Basis eines Betrags an Kanalisierungscodes, die durch die Übertragung gesperrt worden sind aufweist, und zwar zum Ermöglichen einer gedrängten Zuordnung von Kanalisierungscodes zu den mobilen Endgeräten (11), und dass die Übertragung in Abhängigkeit von wenigstens einer berechneten Kostenfunktion durchgeführt wird.

## Revendications

1. Système de télécommunication comprenant une station de base (1) et des terminaux mobiles (11), laquelle station de base (1) comprend un générateur (6) pour générer des codes de découpage en canaux définissant les canaux utilisés pour la communication entre lesdits station de base (1) et terminaux mobiles (11), et laquelle station de base (1) comprend un transféreur (7) pour transférer un appel en cours entre ladite station de base (1) et un terminal mobile (11) d'un premier canal défini par un premier code de découpage en canaux à un deuxième canal défini par un deuxième code de découpage en canaux,
**caractérisé en ce que** ladite station de base (1) comprend un calculateur (9) pour calculer une fonction de coût sur base d'une quantité de codes de découpage en canaux bloqués à cause du transfert, pour permettre une assignation compacte de codes de découpage en canaux aux terminaux mobiles (11), et **en ce que** le transféreur (7) transfère l'appel en cours en fonction d'au moins une fonction de coût calculée.

2. Système de télécommunication selon la revendication 1, **caractérisé en ce que** ladite station de base (1) comprend un émetteur (3) pour émettre un message de transfert audit terminal mobile (11) et comprenant un ancien code de découpage en canaux et un nouveau code de découpage en canaux.

3. Système de télécommunication selon la revendication 2, **caractérisé en ce que** ledit terminal mobile (11) comprend un récepteur (15) pour recevoir ledit message de transfert.

4. Système de télécommunication selon la revendication 1, **caractérisé en ce que** ladite fonction de coût est une fonction pour un code de découpage en canaux c dans la couche i d'une somme de produits d'un paramètre d'occupation pour d'autres codes de découpage en canaux et d'un débit de données pour lesdits autres codes de découpage en canaux et divisé par un débit de données pour les codes de découpage en canaux dans la couche i-1.

5. Système de télécommunication selon la revendication 4, **caractérisé en ce que** ladite fonction de coût = COST = 1 - [Σ u(x)r(x) / rᵢ₋₁], r(x) étant le débit de données de la couche i à laquelle le code x appartient, u(x) étant le paramètre d'occupation égal à 0 si x est libre et étant égal à 1 si x est occupé, et rᵢ₋₁ étant le débit de données de la couche i-1, dans laquelle Σ u(x)r(x) est la somme sur tous les codes émanant du code mère du code c.

6. Station de base (1) pour emploi dans un système de télécommunication comprenant une station de base (1) et des terminaux mobiles (11), laquelle station de base (1) comprend un générateur (6) pour générer des codes de découpage en canaux définissant les canaux utilisés pour la communication entre lesdits station de base (1) et terminaux mobiles (11), et laquelle station de base (1) comprend un transféreur (7) pour transmettre un appel en cours entre ladite station de base (1) et un terminal mobile (11) d'un premier canal défini par un premier code de découpage en canaux à un deuxième canal défini par un deuxième code de découpage en canaux, **caractérisé en ce que** ladite station de base (1) comprend un calculateur (9) pour calculer une fonction de coût sur base de ce qu'une quantité de codes de découpage en canaux sont bloqués à cause du transfert, pour permettre une assignation compacte des codes de découpage en canaux aux terminaux mobiles (11), et **en ce que** le transféreur (7) transfère l'appel en cours en fonction d'au moins une fonction de coût calculée.

7. Procédé pour utilisation dans un système de télécommunication comprenant une station de base (1) et des terminaux mobiles (11), laquelle station de base (1) comprend un générateur (6) pour générer des codes de découpage en canaux définissant les canaux utilisés pour la communication entre lesdits station de base (1) et terminaux mobiles (11), et laquelle station de base (1) comprend un transféreur (7) pour transférer un appel en cours entre ladite station de base (1) et un terminal mobile (11) d'un premier canal défini par un premier code de découpage en canaux à un deuxième canal défini par un deuxième code de découpage en canaux, **caractérisé en ce que** ledit procédé comprend l'étape de calcul (21) d'une fonction de coût sur base d'une quantité de codes de découpage en canaux bloqués à cause du transfert, pour permettre une assignation compacte de codes de découpage en canaux aux terminaux mobiles (11), et **en ce que** l'étape de transfert est réalisée en fonction d'au moins une fonction de coût calculée.

8. Produit de programme de processeur pour utilisation dans un système de télécommunication comprenant une station de base (1) et des terminaux mobiles (11), laquelle station de base (1) comprend un générateur (6) pour générer des codes de découpage en canaux définissant les canaux utilisés pour la communication entre lesdits station de base (1) et terminaux mobiles (11), et laquelle station de base (1) comprend un transféreur (7) pour transférer un appel en cours entre ladite station de base (1) et un terminal mobile (11) d'un premier canal défini par un premier code de découpage en canaux à un deuxième canal défini par un deuxième code de découpage en canaux, **caractérisé en ce que** le produit de programme de processeur comprend une fonction calculant (21) une fonction de coût sur base d'une quantité de codes de découpage en canaux bloqués à cause du transfert, pour permettre une assignation compacte de codes de découpage en canaux aux terminaux mobiles (11) et **en ce que** le transfert est réalisé en fonction d'au moins une fonction de coût calculée.
